## Europäisches Patentamt
## European Patent Office
## Office européen des brevets

(19)

(11) Veröffentlichungsnummer: **0 198 486**
**B1**

(12)

# EUROPÄISCHE PATENTSCHRIFT

(45) Veröffentlichungstag der Patentschrift:
29.06.88

(51) Int. Cl.⁴: **B 65 B 25/06**, A 22 C 11/00

(21) Anmeldenummer: **86105240.5**

(22) Anmeldetag: **16.04.86**

(54) **Verfahren zur Bildung von mit einem Netz umgebenen, in einen essbaren Kollagenfilm eingehüllten Fleischprodukten.**

(30) Priorität: **18.04.85 US 724817**

(43) Veröffentlichungstag der Anmeldung:
**22.10.86 Patentblatt 86/43**

(45) Bekanntmachung des Hinweises auf die Patenterteilung:
**29.06.88 Patentblatt 88/26**

(84) Benannte Vertragsstaaten:
**AT BE CH DE FR GB LI NL SE**

(56) Entgegenhaltungen:
**EP-A-0 175 173**
**DE-A-915 676**
**DE-A-1 124 426**
**DE-A-2 848 987**
**DE-A-3 012 622**
**FR-A-1 058 694**
**FR-A-1 296 085**
**US-A-3 344 467**

(73) Patentinhaber: **Naturin- Werk Becker & Co.,**
**Badeniastrasse 13, D-6940 Weinheim/Bergstrasse**
**(DE)**

(72) Erfinder: **Crevasse, Gary A., 2910 Rhineberry,**
**Rochester Hills, MI 48063 (US)**
Erfinder: **Gammon, David L., 412 Baldwin Drive,**
**Rochester, MI 48063 (US)**
Erfinder: **Sullivan, Michael J., 455 East Maryknoll,**
**Rochester Hills, MI 48063 (US)**

(74) Vertreter: **Klöpsch, Gerald, Dr.- Ing., An Gross St.**
**Martin 6, D-5000 Köln 1 (DE)**

## Beschreibung

### Technisches Gebiet

Die Erfindung betrifft ein Verfahren zur Bildung von mit einem Netz umgebenen Fleischprodukten, die in einen eßbaren Kollagenfilm eingehüllt sind.

### Hintergrund

In der Bemühung, die Qualität, Produktivität und Ästhetik zu verbessern, den Abfall zu verringern und ein kompaktes, aus einzelnen Teilen bestehendes Produkt zum Kochen und Servieren bereitzustellen, ist es bereits seit langem übliche Praxis, ausgewählte Abschnitte von Fleisch, wie Schinken, zu einem einzigen geformten Produkt zu verbinden. Dies wurde versucht durch Verwendung verschiedener Verfahren und Vorrichtungen, einschließlich der Verwendung von Bindern, Verschnürung, Druckverformung und eines elastischen Netzes. Beim Verfahren zur Umhüllung mit einem Netz werden im allgemeinen ausgewählte Fleischabschnitte in ein elastisches Netzwerk eingebracht. Die elastische Natur des Netzes liefert eine Haltekraft, welche die Oberflächen der Fleischabschnitte in enger Nachbarschaft hält, was zu einer kompakten, festen Einheit führt.

Verbesserungen bei der Verpackung von Fleischwaren in Netze erlauben gleichmäßige und dichte Packung des Fleisches im Netz. Beispiele solcher Vorrichtungen beschreiben die US-A-3 344 467 (Barbu) und US-A-3 290 841 und 3 477 860 (Sartore), die ein flexibles Metallblech aufweisen, welches zu einem Kegelstumpf verformt ist. Das kleinere Ende des Konus wird von dem Netz umgeben, während die Fleischportionen in das größere, gegenüberliegende Ende abgelegt werden. Dann wird auf die Fleischportionen eine Kraft ausgeübt, wodurch sie durch den Konus in das Netz geführt werden. Durch den Kegelstumpf werden die Fleischportionen dicht in eine Gestalt zusammengedrängt, die durch das Netz gehalten wird. Die netzumhüllte Fleischware kann dann vom kleineren Konusende abgenommen werden.

Das Fleischprodukt wird anschließend gekocht oder geräuchert und das Netz vor dem Gebrauch entfernt. Bei der Entfernung des Netzes zerreißt im allgemeinen die Oberfläche der Fleischware, weil das Netz gewöhnlich im Fleisch eingebettet und häufig von Fleischexsudat bis zu dem Ausmaß umgeben ist, daß das Netz vom Exsudat bedeckt ist. Die Entfernung des Netzes zerreißt und unterbricht die Oberfläche der Fleischware, was zu Ausbeuteverlusten und einem sehr unansehnlichen und ungefälligem Aussehen führt.

Es ist bekannt geworden, daß das Einhüllen eines Fleischprodukts in eine eßbare Kollagenfolie eine schützende Barriere liefert, die eine Einbettung des elastischen Netzes in die Fleischoberfläche wirksam verhindert. Jegliches aus dem Fleisch während des Kochens oder der Verarbeitung austretende Exsudat wird innerhalb der Folie gehalten und klebt nicht am Netz, so daß das Netz vor dem Verbrauch ohne Störung der Oberfläche der Fleischware leicht entfernt werden kann.

Es hat sich jedoch als schwierig erwiesen, eine Vielzahl von schlüpfrigen, einzelnen Fleischstücken in die Folie bzw. den Film einzupacken und sie dann mit dem Netz unter Verwendung von herkömmlichen Verfahren zu umhüllen, die eine Verpackung in einem Film nicht anwenden. Versuche, Fleischprodukte in einen eßbaren Kollagenfilm zu verpacken und diesen dann durch die Vorrichtung zur Umhüllung mit einem Netz hindurch zu pressen, führen zu Reibung zwischen den Kontaktoberflächen der Vorrichtung und dem Film. Durch diese Reibung wird der Film beansprucht, was zu seinem Reißen oder einer derartigen Schwächung führt, daß er bei nachfolgendem physikalischem Kontakt oder plötzlicher Wärmeeinwirkung (thermischer Schock) versagt. Ferner hat sich die Verwendung der bekannten Vorrichtungen als beschwerlich erwiesen, weil sehr wenig Raum für die Ausbreitung der eßbaren Kollagenfolie und die Umhüllung der Fleischware mit dieser Folie vorhanden ist. Außerdem ist es üblich, eßbaren Kollagenfilm auf einer Rolle in Vorrat zu halten. Wenn ein Stück Folie gewünscht wird, wird eine berechnete Folienmenge abgewickelt und dann von der Rolle abgeschnitten. Die Lagerung der Folie in der Umgebung der Umhüllung des Fleischs mit einem Netz setzt die Folie umweltbedingten Verschmutzungen ebenso aus wie der Gefahr einer physikalischen Zerstörung.

Die Aufgabe der Erfindung ist es, ein Verfahren zu schaffen, das diese Nachteile vermeidet. Diese Aufgabe wird durch das Verfahren gemäß Anspruch 1 gelöst. Weitere vorteilhafte Merkmale des Verfahrens sind gegenstand der Unteransprüche.

### Offenbarung der Erfindung

Die Erfindung betrifft ein Verfahren zur Herstellung eines netzumhüllten Fleischprodukts, das einen zwischen Fleischprodukt und Netz angeordneten, eßbaren Kollagenfilm aufweist. Eine Ausführungsform der Erfindung betrifft die Verwendung einer Vorrichtung zur Extrusion von in eine eßbare Kollagenfolie verpackten Fleischwaren in ein Netz. Die Vorrichtung enthält einen Aufnahmeteil, der einen trogförmigen Bereich mit offenem Ende zur Aufnahme einer Bahn aus eßbarem Kollagenfilm aufweist, welche eine zur Verpackung der in dem Trog abgelegten Fleischwaren ausreichende Abmessung hat. Die Vorrichtung weist ferner einen Extrusionsteil auf, welcher einen ersten, zum trogförmigen Bereich offenen Bereich und einen zweiten kleineren Bereich zur Aufnahme des Netzes hat, in welches das verpackte Fleischprodukt extrudiert wird. Schließlich weist die Vorrichtung eine Schmiereinrichtung für die Verteilung eines Schmiermittelfilms auf den Oberflächen von Aufnahmeteil und Extrusionsteil auf, welche während des Transports des verpackten Fleischprodukts in das Netz mit dem eßbaren Kollagenfilm in Berührung stehen. Die Schmiermittelleitungen liefern einen konstanten Schmiermittelvorrat, der die Oberflächen des Aufnahmetrogs entlang und durch die Extrusionseinrichtung fließt. Das Schmiermittel verringert den Kontakt zwischen den Umfangsflächen des verpackten Fleischprodukts und den Kontaktoberflächen der Vorrichtung, wodurch die Beanspruchung des eßbaren Kollagenfilmsminimiert wird. Das verwendete Schmiermittel ist bevorzugt Wasser. Die Schmierungseinrichtung weist ein Paar Schmiermittelzuleitungen auf, welche entlang ihrer Achse perforiert sind. Die Schmiermittelleitungen sind an den Lippenbereichen des Aufnahmetrogs befestigt.

Einzelne Bahnen des Films können gesammelt und in einem schachtelförmigen Vorratsbehälter gelagert werden. Das obere Ende des Behälters hat eine Öffnung, durch die einzelne Bahnen der eßbaren Kollagenfolie für die Verpackung der Fleischwaren entnommen werden können.

Bei dem bevorzugten Verfahren wird ein Fleischnetz über der Austrittsseite der Extrusionseinrichtung in Stellung gebracht. Danach wird der Schmiermittelfluß in Gang gesetzt. Wenn die Oberflächen, welche mit der Umhüllung aus eßbarem Kollagenfilm in Berührung stehen, mit einem Schmiermittelfilm bedeckt sind, wird ein einzelnes Stück des eßbaren Kollagenfilms aus dem Vorratsbehälter entnommen und in den Aufnahmetrog eingelegt. Darauf werden Fleischwaren auf den Film gelegt und mit diesem umwickelt. Aufgrund der Bauweise des Troges werden der Boden und die meisten Seite automatisch mit dem Film umhüllt, wenn die Fleischwaren darauf gelegt werden, wodurch der Verpackungsschritt erleichtert wird. Das verpackte Fleisch wird dann durch die Extrusionseinrichtung und in das Netz gepreßt. Nach Vollendung der Operation wird das netzumhüllte Fleischprodukt von der Extrusionseinrichtung entfernt. Der eßbare Kollagenfilm, der um das Fleischprodukt herumgewickelt ist, ist frei von Rissen und Spannungsstellen, welche zu einem nachfolgenden Versagen der eßbaren Kollagenfilmgrenzschicht führen könnten.

## Kurze Beschreibung der Zeichnungen

Weitere Gegenstände und Vorteile der Erfindung ergeben sich aus der genauen Beschreibung der bevorzugten Ausführungsform, welche sich auf die folgenden Zeichnungen bezieht:

Figur 1 ist eine Seitenansicht der Vorrichtung, die zum Abwickeln einer Vorratsrolle des eßbaren Kollagefilms dient, einschließlich einer Schneidvorrichtung, sowie ein Querschnitt des Bodenbereichs des Vorratsbehälters.

Figur 2 stellt in perspektivischer Sicht den Vorratsbehälter dar und zeigt eine einzelne eßbare Kollagenfolie, die durch eine Öffnung im Kopfende entnommen wird.

Figur 3 ist ein Querschnitt durch eine Vorrichtung entlang der Linie 3-3 von Figur 4 und zeigt einen eßbaren Kollagenfilm aufnahmebereit für die Fleischware.

Figur 4 ist eine Seitenansicht einer Vorrichtung mit der auf dem Film abgelegten Fleischware.

Figur 5 ist eine Draufsicht auf eine Vorrichtung, wo das umhüllte Fleischprodukt in das Netz gepreßt wird.

Figur 6 ist eine Endansicht der Vorrichtung ohne Film und

Figur 7 zeigt in perspektivischer Sicht das erfindungsgemäße Produkt.

## Beschreibung der bevorzugten Ausführungsform

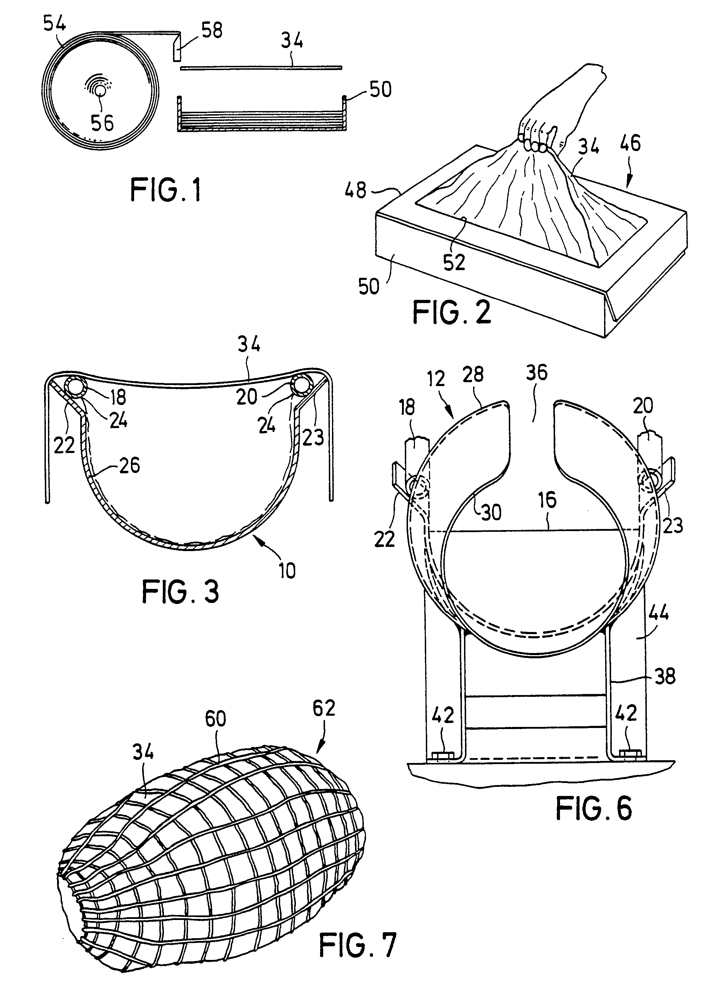

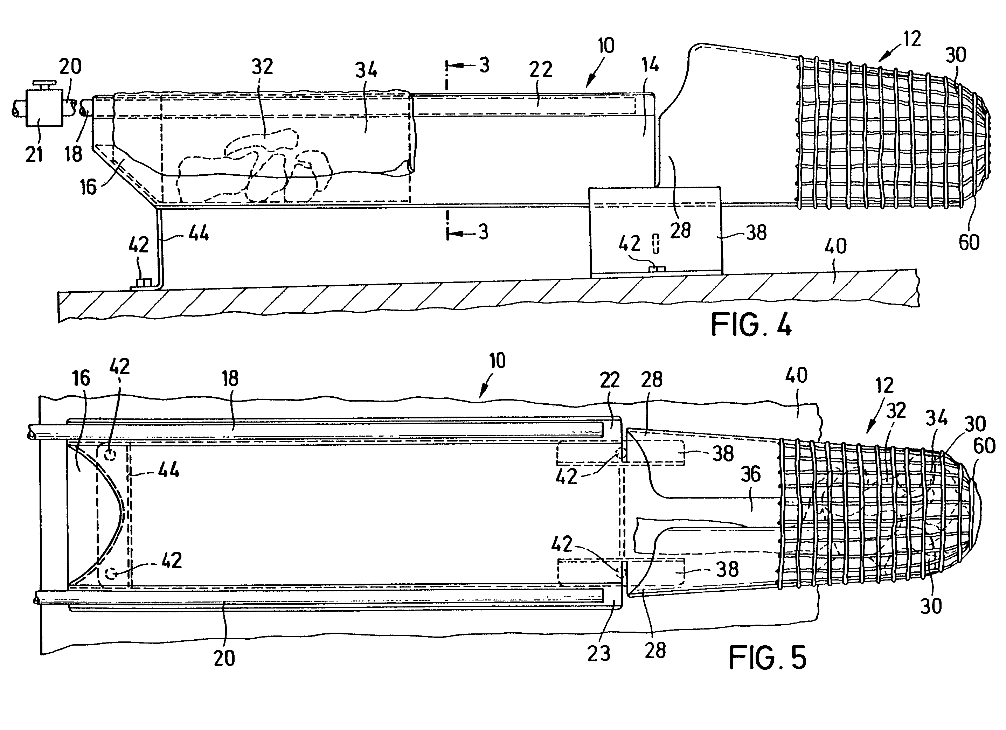

Die Zeichnungen und insbesondere Figur 4 zeigen eine Vorrichtung für die Umhüllung von Fleischwaren mit einem Netz, die einen Aufnahmetrog 10 und ein Fleischhorn 12 aufweist. Der Trog 10 hat ein offenes, erstes Ende 14 und einen durch die Wand 16 verschlossenes, zweites Ende. Ein Paar von Verteilungsleitungen 18 und 20 sind an den obersten, lippenförmigen Bereichen 22 und 23 des Trogs 10 befestigt. Die Leitungen 18 und 20 haben Mehrfachöffnungen 24, wie in Figur 3 gezeigt, verteilt entlang ihrer Achse, durch die Schmiermittel 26 aus- und auf die innere Oberfläche des Trogs 10 tritt. Die Leitungen 18 und 20 umfassen bevorzugt geeignete Ventile wie das Ventil 21 zur Steuerung des Schmiermittelflusses.

Die Anzahl und Größe der Öffnungen 24 und der Schmiermitteldruck werden so gewählt, daß eine gleichmäßige Verteilung des Schmiermittels entlang der inneren Oberfläche des Trogs 10 erreicht wird. Das Schmiermittel 26 ist bevorzugt Wasser, kann jedoch ein beliebiges Fluid sein, das mit den Fleischprodukten 32 und dem eßbaren Kollagenfilm 34 verträglich ist und keinen unerwünschten Rückstand auf den äußeren Oberflächen der Vorrichtung und/oder des netzumhüllten Endprodukts hinterläßt.

Der Trog 10 ist bevorzugt aus einem plattenförmigen Material, wie rostfreiem Stahl oder Kunststoff aufgebaut. Das ausgewählte Material muß eine glatte Oberfläche zur Minimierung der Reibung haben. Der Trog 10 hat im allgemeinen U-förmigen Querschnitt und ist oben offen. Der Trog 10 ist daher im Grundsatz ein Behälter mit drei Seiten; zwei der Seiten sind die gegenüberliegenden Längswände, die dritte Seite ist die Endwand 16. Die Bauweise des Trogs 10 ist von großer Wichtigkeit, da er zur Beschränkung der Bewegung des individuellen Fleischprodukt notwendig ist. Wenn einmal die Fleischwaren auf den Film gelegt sind, sinken sie auf den Boden des Trogs. Dieses Absinken bedeutet praktisch eine selbsttätige Verpackung, da die Fleischwaren aufgrund der Bauweise des Trogs weitgehend an dessen drei Seiten von dem Film umhüllt werden. Daher ist es für den Benutzer verhältnismäßig einfach, die Umhüllung der anderen Seite und der oberen Grenzfläche der Fleischprodukte zu beenden.

Das Fleischhorn 12 weist im allgemeinen kreisförmigen Querschnitt mit einem offenen Ende 28 auf, welches mit dem ersten Ende 14 des Trogs 10 verbunden ist. Das zweite Ende 30 des Fleischhorns 12 hat im allgemeinen einen kleineren kreisförmigen Querschnitt als das erste Ende 28 derart, daß das Fleischhorn 12 insgesamt die Form eines Kegelstumpfs hat. Das Fleischhorn 12 hat ein im allgemeinen konisch zulaufendes Profil und bewirkt daher die Bildung oder Extrusion der hindurchgepreßten Fleischware 32. Verschiedene Größen von Fleischhörnern können zur Herstellung von Produkten verschiedener Form und Größe ausgewählt werden.

Das Fleischhorn 12 hat einen Längsschlitz 36 entlang seiner Länge (wie am besten aus Figur 5 ersichtlich). Das Fleischhorn 12 ist bevorzugt aus einem elastischen, plattenförmigen Material, wie rostfreiem Stahl oder Kunststoff aufgebaut. Das ausgewählte Material sollte eine glatte Oberfläche zwecks Minimierung der Reibung haben.

Die bodennähste, innere Oberfläche des Trogs 10 und die bodennächste Oberfläche des Fleischhorns 12 sind einander angepaßt und ausreichend geneigt, damit das Schmiermittel 26 durch die Leitungen 18 und 20 und aus dem zweiten Ende 30 des Fleischhorns 12 fließt.

Das Fleischhorn 12 und das erste Ende 14 des Trogs sind miteinander verbunden und durch einen Träger 38 gehalten, der am Boden 40 mittels Schrauben 42 befestigt ist. Der Träger 38 ist mit dem Fleischhorn 12 und dem Trog 10 verschweißt. Der Träger 44 hält das zweite Ende 16 des Trogs 10. Träger 44 ist am zweiten Ende 16 des Trogs 10 durch Verschweißen und am Boden durch Schrauben 42 befestigt. Die Unterschiede in den Abmessungen zwischen Trägern 38 und 44 bewirken ein Gefälle, wodurch das im Trog 10 verteilte Schmiermittel 26 den Trog durchfließt und aus dem zweiten Ende 30 des Fleischhorns 12 auszufließt. Klemmstücke oder Abstandshalter (nicht gezeichnet) können in Verbindung mit Träger 44 und Träger 38 zur Einstellbarkeit der Neigung und/oder zum Ausgleich von Unregelmäßigkeiten der Oberfläche des Bodens 40 eingesetzt werden.

Wie Figur 2 zeigt, wird der eßbare Kollagenfilm 34 zur Verwendung in der erfindungsgemäßen Vorrichtung in einem Behälter 46 gelagert, der ein Oberteil 48 aufweist, der an einem Bodenbereich 50 angelenkt ist, die miteinander unter Bildung eines schachtelähnlichen Vorratsbehälters zusammenwirken. Das Oberteil 48 weist eine Öffnung 52 auf, durch die einzelne Bahnen von eßbarem Kollagenfilm 34 entnommen werden können. Die Behältergröße wird von der Größe des darin gelagerten Kollagenfilms bestimmt. Die Größe des eßbaren Kollagenfilms wird durch die zur Verpackung der Fleischware erforderliche Filmgröße bestimmt.

Wie in Figur 1 dargestellt, wird der eßbare Kollagenfilm 34 in einer Rolle 54 aufbewahrt. Das verwendete eßbare Kollagen wird aus dem Corium von Rinderhäuten erhalten. Der äußere Anteil (annähernd 2 bis 4 mm) einer Rinderhaut wird für die Lederproduktion entfernt, der innere Teil wird von Fleisch, Fett oder losem Bindegewebe befreit. Das verbleibende Unterhautbindegewebe, aufgebaut aus einem engen Netzwerk von Kollagenfasern, wird chemisch und mechanisch zu einer gießfähigen, wässrigen Masse abgebaut. Weichmacher und Vernetzungsmittel werden der wässrigen Masse zugesetzt, die dann in gleichförmiger Dicke auf ein geeignetes Förderband gebracht wird, welches durch einen Trockentunnel geführt wird. Während der Trocknung der wässrigen Masse nimmt sie die Eigenschaften eines Films an, der zu einer Vorratsrolle 54 gewickelt werden kann. Zur Herstellung einzelner Bahnen des eßbaren Kollagenfilms 34 wird die Vorratsrolle 54 auf eine Spindel 56 gesteckt und abgewickelt. Während der Film abgewickelt wird, wird er mit dem Messer 58 auf die gewünschte Länge zugeschnitten. Der geschnittene Film 34 wird dann im Bodenteil 50 des Behälters 46 gestapelt. Ist der Bodenteil 50 voll, wird das Oberteil 48 darauf gesetzt, womit eine hygienische, sichere Umgebung für den Transport und die Lagerung des erfindungsgemäß verwendeten Kollagenfilms vorhanden ist.

Der Behälter 46 kann aus beliebigem Material hergestellt sein, welches physikalischen, thermischen und chemischen Einflüssen widersteht, und welches dem eßbaren Kollagenfilm keinen Geruch, Geschmack oder eine toxische Wirkung verleiht. Das Oberteil 48 und das Bodenteil 50 können aus einem wegwerfbaren Papierprodukt gebildet werden, um die Notwendigkeit der Rückgabe leerer Behälter vom Ort der Umhüllung mit dem Netz zum Ort des Zuschneidens auszuschalten.

Um die Umhüllung mit dem Netz durchzuführen, wird der Schmiermittelfluß gestartet und so eingestellt, daß ein gleichmäßiger Film über die inneren Oberflächen des Trogs 10 verteilt wird. Danach wird ein Fleischnetz 60 über dem zweiten Ende 30 des Fleischhorns 12 plaziert. Dann wird eine einzelne Bahn aus eßbarem Kollagenfilm 34 aus dem Vorratsbehälter 46 entnommen und durch die Öffnung 52 (wie aus Figur 2 ersichtlich) gezogen. Der eßbare Kollagenfilm 34 wird dann über die lippenförmigen Teile 22 und 23 des Trogs 10 in Stellung gebracht (wie in Figur 3 gezeigt). Die Fleischware 32 wird dann auf den eßbaren Kollagenfilm 34 gelegt. Der eßbare Kollagenfilm 34 wird danach um die Fleischware 32 gewickelt und durch das Fleischhorn 12 in das Fleischnetz 60 gepreßt (wie in Figur 5 gezeigt). Darauf wird das Netz 60 vom zweiten Ende 30 des Fleischhorns 12 entfernt, wobei das Endprodukt 62 erhalten wird (siehe Figur 7).

Die Fleischwaren bestehen im allgemeinen aus Stücken eines Tieres wie Schinken, in die häufig flüssige Zusätze injiziert worden sind. Die Fleischprodukte sind daher schlüpfrig und schwierig handzuhaben. Vor dem erfindungsgemäßen Verfahren gab es keinen geeigneten Weg, eine Vielzahl dieser einzelnen Fleischprodukte mit einer Folie zu umhüllen. Die schlüpfrigen Stücke neigten beispielsweise dazu, zur Seite zu rutschen, wenn sie auf die sich auf einer glatten Oberfläche ausgebreiteten Folie gelegt wurden.

Jedoch kann dies erfindungsgemäß schnell und leicht getan werden, da die Wände des Trogs 10 so wirken, daß sie die Fleischwaren in einem kompakten Bereich halten und dazu dienen, daß die Kollagenbahn sich am Boden und den drei Seiten den Fleischprodukten anpaßt, wenn diese auf den Boden des Troges fallen. Es ist dann eine leichte Aufgabe für den Benutzer, die Kanten der Bahn zu ergreifen und sie oberhalb der Fleischprodukte zum Beenden des Verpackungsschrittes zusammenzufalten. Einmal verpackt, verhindert die Schmierung auf den Oberflächen der Vorrichtung Schädigungen des Films, wenn die verpackte Fleischware in das Netz gestopft wird. Das von einem Netz umgebene Endprodukt 62 ist dann fertig für die weitere Verarbeitung wie die Räucherung zu Räucherschinken, Beefroast oder ähnlichem.

Aus der vorstehenden Beschreibung gehen mehrere wesentliche Vorteile hervor. Die beschriebene Ausführungsform wird gegenwärtig als die am besten geeignete angesehen. Es wurde kein Versuch gemacht, alle verschiedenen Alternativen und Modifikationen des allgemeinen Erfindungskonzepts aufzuführen. Solche Modifikationen oder Verbesserung ergeben sich für den Fachmann aus den Zeichnungen, der Beschreibung und den Ansprüchen.

**Patentansprüche**

1. Verfahren zur Herstellung von in eine eßbare Kollagenfolie gehüllten, und mit einem Netz (60) umgehenen Fleischprodukten (62), enthaltend die folgenden Schritte:
(1) eine Bahn aus eßbarer Kollagenfolie (34) wird <u>auf</u> einen an einem Ende (14) offenen, durch drei aufrechte Seitenwände definierten Trog (10) gelegt,
(2) auf die Folie (34) wird das Fleischprodukt (32) abgelegt, wobei das Gewicht des Fleischprodukts (32) die Folie (34) veranlaßt, sich im wesentlichen den Trogwänden unter wenigstens teilweiser Umhüllung des Fleischprodukts (32) anzupassen,
(3) die Kanten der Folie (34) werden oberhalb des Fleichprodukts (32) zwecks dessen vollständiger Verpackung gefaltet,
(4) der Trog (10) und eine Extrusionseinrichtung (12) werden geschmiert und
(5) das verpackte Fleischprodukt wird in das Netz (60) extrudiert.

2. Verfahren nach Anspruch 1, welches als weitere Stufen das Abwickeln der eßbaren Kollagenfolie (34) von einer Vorratsrolle (54), das Zuschneiden der Folie in Stücke und die Lagerung dieser Stücke in einem Vorratsbehälter (46) vor der Verpackung enthält.

3. Verfahren nach Anspruch 1 oder 2 unter Verwendung einer Vorrichtung, enthaltend:
eine Aufnahmeeinrichtung (10) mit einem trogförmigen, am Ende (14) offenen Bereich für die Aufnahme einer Bahn aus eßbarer Kollagenfolie (34) von ausreichender Größe zur Umhüllung der im Trog (10) auf der Folie abgelegten Fleischware (32), wobei die Folie (34) anschließend um die Fleischware gewickelt wird;
eine Extrusionseinrichtung (12) mit einem ersten Ende (28), welches mit der Aufnahmeeinrichtung (10) verbunden ist, und einem zweiten Ende (30) zur Aufnahme des Netzes (60), in das das umhüllte Fleischprodukt (32) extrudiert wird; sowie
eine Schmiereinrichtung (18, 20, 21, 24, 26) zur Schmierung der Oberflächen von Aufnahme- und Extrusionseinrichtung (10,12) welche mit der Folie (34) während des Transports der umhüllten Fleischware (32) in das Netz (60) in Berührung stehen.

4. Verfahren nach Anspruch 3, worin die Aufnahmeeinrichtung eine mit den Längsseiten des Trogs (10) unter Bildung eines dreiseitigen Behälters ausreichender Tiefe für die Aufnahme einer Vielzahl von einzelnen Fleischwarenstücken (32) zusammenwirkende Rückwand (16) aufweist, und worin die Aufnahmeeinrichtung und die Extrusionseinrichtung zwecks Fließens des Schmiermittels (26) geneigt sind.

5. Verfahren nach Anspruch 4, worin die Neigung mittels Trägern (38, 44) verschiedener Höhe erzeugt wird, welche Aufnahme und Extrusionseinrichtung halten.

6. Verfahren nach Anspruch 3, worin die Extrusionseinrichtung (12) eine Oberfläche aufweist, die das verpackte Fleischprodukt (32) berührt, und welche einen vom ersten (28) zum zweiten Ende (30) fortschreitend verringerten Querschnitt aufweist.

7. Verfahren nach Anspruch 3 worin die Extrusionseinrichtung (12) eine Platte aus einem zu einem Kegelstumpf verformten Material mit einem ununterbrochenen in Längsrichtung verlaufenden Schlitz (36) aufweist.

8. Verfahren nach Anspruch 3, worin die Schmiereinrichtung wenigstens eine perforierte Schmiermittelleitung (18, 23) aufweist, die auf der Aufnahmeeinrichtung zwecks Schmiermittelbelieferung der Oberfläche der Aufnahmeeinrichtung angeordnet ist.

9. Verfahren nach Anspruch 3, worin die Aufnahmeeinrichtung (10) U-förmigen Querschnitt aufweist.

10. Verfahrn nach Anspruch 3, worin das Schmiermittel Wasser ist.

11. Verfahren nach einem der Ansprüche 3 bis 10 unter Verwendung eine Vorrichtung, welche enthalt ein Extrusionsteil (12) mit kreisförmigem Querschnitt und einem ersten, mit dem Aufnahmetrog verbundenen Ende (28), einem fortschreitend vom ersten zu einem zweiten Ende (30) sich verringernden Querschnitt und einem ununterbrochenen in Längsrichtung verlaufenden Schlitz (36), wobei das Extrusionsteil für die Aufnahme des Netzes (60) eingerichtet ist, in das das eingehüllte Fleischprodukt (32) verpackt wird.

12. Verfahren nach einem der Ansprüche 3 bis 11, bei dem eine Vorratsschachtel (46) mit einem Boden- (50) und Deckelteil verwendet wird wobei der Deckelteil (48) eine Öffnung aufweist, durch die einzelne in der Schachtel gestapelte Folienabschnitte (34) entnommen werden können.

13. Verfahren nach Anspruch 12, bei dem die Vorratsschachtel aus einem wegwerfbaren Papierprodukt besteht.


**Claims**

1. A method for making meat products (62) enclosed in an edible collagen film and wrapped in a netting (60) comprising the steps of:
   (1) placing a sheet of edible collagen film (34) on a trough (10) having an open end (14), said trough being defined by three upright side walls,
   (2) depositing the meat product (32) upon the film (34), whereby the weight of the meat product (32) causes the film (34) to substantially conform to the walls of the trough thereby at least partially enveloping the meat product (32),
   (3) folding the edges of the film (34) over the top of the meat product (32) to fully enclose the meat product,
   (4) lubricating said trough (10) and an extrusion means (12), and
   (5) extruding the wrapped meat product into the netting (60).

2. A method according to claim 1, further comprising the steps of unrolling the edible collagen film (34) from a storage roll (54), trimming said film into pieces, and storing said film pieces in a storage box (46) prior to wrapping.

3. A method according to claims 1 or 2 using an apparatus comprising:
   a receiving means (10) including a trough-like portion having an open end (14) for receiving a sheet of an edible collagen film (34) of sufficient dimension to wrap the meat product (32) deposited in said trough (10) on the film, whereby the film (34) is subsequently being wrapped about the meat product;
   an extrusion means (12) having a first end (28) connected to the receiving means (10) and a second end (30) for receiving the netting (60) into which the wrapped meat product (32) is extruded; and
   a lubrication means (18, 20, 21, 24, 26) for lubricating the surfaces of the receiving means and the extrusion means (10, 12) which contact the film (34) during movement of the wrapped meat product (32) into the netting (60).

4. A method according to claim 3, wherein the receiving means includes a rear wall (16) cooperating with the lateral sides of the trough (10) to form a three-sided receptacle of sufficient depth to hold a plurality of individual meat product pieces (32), and wherein the receiving means and the extrusion means are inclined to allow flow of the lubricant (26).

5. A method according to claim 4, wherein the incline is produced by brackets (38, 44) of different heights supporting the receiving means and extrusion means.

6. A method according to claim 3, wherein the extrusion means (12) has a surface which contacts the wrapped meat product (32) and which has a progressively reduced cross section from the first end (28) toward the second end (30).

7. A method according to claim 3, wherein the extrusion means (12) comprises a sheet of material formed to the shape of a truncated cone having a continuous longitudinal split (36).

8. A method according to claim 3, wherein the lubricating means comprises at least one perforated lubricant conduit (18, 20) positioned on the receiving means for delivering lubricant to the surface of the receiving means.

9. A method according to claim 3, wherein the receiving means (10) has a U-shaped cross section.

10. A method according to claim 3, wherein the lubricant is water.

11. A method according to any of claims 3 to 10, by using an apparatus comprising:
   an extrusion member (12) having a circular cross section and with a first end (28) connected to the receiving trough, a progressively reduced cross section from the first end toward a second end (30), and a continuous longitudinal split (36), said extrusion member adapted for receiving a netting (60) into which the encased meat product (32) is wrapped.

12. A method according to any of claims 3 to 11 in which
   a storage box (46) having a bottom member (50) and a top member, the top member (48) having an aperture through which individual sheets of the film (34), stacked within the box, may be removed.

13. A method according to claim 12, in which the storage box is constructed from a disposable paper product.

## Revendications

1. Procédé de fabrication de produits carnés (62), enrobés d'une feuille de collagène et enveloppés d'un filet (60), comprenant les étapes suivantes :

(1) on dépose une nappe d'une feuille de collagène comestible (34) sur une auge (10) ouverte à une extrémité (14) et délimitée par trois parois latérales droites,

(2) on dépose le produit carné (32) sur la feuille (34), si bien que le poids du produit carné (32) amène la feuille (34) à s'adapter sensiblement aux parois de l'auge avec au moin enrobage partiel du produit carné (32).

(3) on replie les côtés de la feuille (34) au-dessus du produit carné (32) en vue de son emballage complet,

(4) on lubrifie l'auge (10) et un dispositif d'extrusion (12) et

(5) on extrude le produit carné emballé dans le filet (60).

2. Procédé suivant la revendication 1, caractérisé en ce qu'il comprend, à titre d'étapes supplémentaires, le dévidage d'une feuille de collagène comestible (34) à partir d'un rouleau de réserve (54), la découpe de la feuille en pièces et l'emmagasinage de ces pièces dans un récipient d'alimentation (46) avant l'emballage.

3. Procédé suivant la revendication 1 ou 2, mis en oeuvre en recourant à l'emploi d'une installation comprenant:

- un dispositif de réception (10) comportant une zone ou région en forme d'auge, ouverte à son extrémité (14), pour la réception d'une nappe d'une feuille de collagène comestible (34) de grandeur suffisant à l'enrobage du produit carné (32) déposé sur la feuille dans l'auge (10), où l'on entoure ensuite le produit carné de la feuille (34) ;

- un dispositif d'extrusion (12) comportant une première extrémité (28) raccordée au dispositif de réception (10), et une seconde extrémité (30) pour recevoir le filet (60) dans lequel le produit carné (32) enrobé est extrudé ;

- comme aussi un dispositif de lubrification (18, 20, 21, 24, 26) destiné à lubrifier les surfaces des dispositifs de réception et d'extrusion (10, 12), qui entrent en contact avec la feuille (34) au cours du transport du produit carné (32) enrobé dans le filet (60).

4. Procédé suivant la revendication 3, caractérisé en ce que le dispositif de réception présente une paroi dorsale (16) collaborant avec les côtés longitudinaux de l'auge (10) pour former un récipient à trois côtés, de profondeur suffisante pour la réception d'une multiplicité de pièces (32) individuelles de produit carné et le dispositif de réception et le dispositif d'extrusion sont inclinés en vue de l'écoulement du lubrifiant (26).

5. Procédé suivant la revendication 4, caractérisé en ce que l'inclinaison ou pente est obtenue à l'aide de supports (38, 44) de hauteurs différentes qui soutiennent le dispositif de réception et le dispositif d'extrusion.

6. Procédé suivant la revendication 3, caractérisé en ce que le dispositif d'extrusion (12) présente une surface qui entre en contact avec le produit carné (32) emballé et qui présente une section transversale se réduisant constamment de la première (28) à la seconde (30) extrémités.

7. Procédé suivant la revendication 3, caractérisé en ce que le dispositif d'extrusion (12) présente une plaque en une matière conformée en tronc de cône, avec une fente (36) ininterrompue s'étendant en direction longitudinale.

8. Procédé suivant la revendication 3, caractérisé en ce que le dispositif de lubrification présente au moins une conduite à lubrifiant perforée (18, 20), qui est agencée sur le dispositif de réception en vue d'alimenter la surface du dispositif de réception en lubrifiant.

9. Procédé suivant la revendication 3, caractérisé en ce que le dispositif de réception (10) présente une section transversale en forme de U.

10. Procédé suivant la revendication 3, caractérisé en ce que le lubrifiant est constitué d'eau.

11. Procédé suivant l'une des revendications 3 à 10, mis en oeuvre en recourant à l'emploi d'une installation comprenant:

- un organe d'extrusion (12) avec section transversale circulaire et une première extrémité (28), raccordée à l'auge de réception, la section transversale se réduisant constamment, de la première à une seconde (30) extrémité et une fente (36) ininterrompue s'étendant en direction transversale, si bien que l'organe d'extrusion est adapté pour recevoir le filet (60) dans lequel on emballe le produit carné (32) enrobé.

12. Procédé suivant l'une des revendications 3 à 11, conformément auquel on utilise:

- une boîte d'alimentation (46) avec une partie inférieure (50) et une partie formant couvercle, où la partie formant couvercle (48) présente une ouverture par laquelle on peut prélever des feuilles découpées (34) individuelles, empilées dans la boîte.

13. Procédé suivant la revendication 12, conformément auquel la boîte d'alimentation se compose d'un produit en papier, jetable.

0 198 486

FIG.1

FIG. 2

FIG. 3

FIG. 6

FIG. 7

FIG. 4

FIG. 5